(19) Europäisches Patentamt
European Patent Office
Office européen des brevets

(11) **EP 2 711 398 A1**

(12) **EUROPEAN PATENT APPLICATION**
published in accordance with Art. 153(4) EPC

(43) Date of publication:
**26.03.2014 Bulletin 2014/13**

(21) Application number: **12785117.8**

(22) Date of filing: **17.02.2012**

(51) Int Cl.:
*C08L 101/00* (2006.01)   *C08K 3/08* (2006.01)
*C08K 5/3415* (2006.01)   *C09D 5/23* (2006.01)
*C09D 201/00* (2006.01)   *H01F 1/26* (2006.01)
*H01F 1/33* (2006.01)

(86) International application number:
**PCT/JP2012/053784**

(87) International publication number:
**WO 2012/157304 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2011 JP 2011109846**

(71) Applicant: **Tanaka Seimitsu Kogyo Co., Ltd. Toyama-shi Toyama 930-0996 (JP)**

(72) Inventors:
• **TANINO, Katsumi**
  **Toyama-shi**
  **Toyama 930-0996 (JP)**
• **KAWAMOTO, Michio**
  **Tokyo 167-0052 (JP)**
• **KAKUTANI, Yoshihiro**
  **Toyama-shi**
  **Toyama 930-0996 (JP)**

(74) Representative: **Plougmann & Vingtoft A/S Rued Langgaards Vej 8 2300 Copenhagen S (DK)**

(54) **MAGNETICALLY ENHANCED RESIN**

(57)     A major objective of the present invention is to provide a magnetically enhanced resin and the like having an improved magnetic permeability. The magnetically enhanced resin contains a ferromagnetic material, a compound having a macrocyclic $\pi$ electronic structure, and an adhesive resin. The ferromagnetic material is preferably a powder of a Fe-Ni alloy, a Fe-Ni-Mo alloy, a Fe-Ni-Cu alloy, or a Fe-Al-Si alloy. The ferromagnetic material is preferably a powder of permalloy, supermalloy, sendust, or ferrite. The compound having a macro-cyclic $\pi$ electronic structure is preferably phthalocyanine, porphyrin, or polycyanine, a substitution product thereof, or a metal coordination complex thereof. The adhesive resin is preferably an epoxy resin, a melamine resin, a polyimide resin, a polycarbonate resin, a phenol resin, or a fluorosilicone resin. The average particle size of the powder of the ferromagnetic material is preferably 0.1 to 100 $\mu$m.

EP 2 711 398 A1

**Description**

TECHNICAL FIELD

The present invention belongs to the technical field of magnetically enhanced resins and coating materials or the like using the same.

BACKGROUND ART

Resin-bonded magnetic materials are characterized by moldability at a low temperature, machine processability, precision moldability, low magnetic loss at high frequency, etc. In particular, due to the low magnetic loss at high frequency thereof, magnetic materials are expected to be applied to specially shaped small magnetic components etc. However, conventional resin-bonded magnetic materials have low magnetic permeability, which limits the use thereof as magnetic materials.

Meanwhile, it was known that addition of a thermosetting resin and a metal chelate compound to a Mn-Zn ferrite powder improves the magnetic properties of the resulting composition (see Non Patent Literature 1). However, the literature described only that an equal amount of a Co chelate powder, a Fe chelate powder, a Mn chelate powder, and a Ni chelate powder were blended, and did not reveal specific constitutions as to what kind of compound was used as a chelating agent, what kind

of solvent was used, etc.

CITATION LIST

[Non Patent Literature]

[NPL 1] Katsumi Tanino and five others, "No.237: Effect of chelating agent on properties of resin-bonded magnetic materials (in Japanese)" Abstracts of the 1987 Annual Meeting of the Institute of Electrical Engineers of Japan, 287-288, 1987

SUMMARY OF INVENTION

TECHNICAL PROBLEM

A major objective is to provide a magnetically enhanced resin and the like having an improved magnetic permeability.

SOLUTION TO PROBLEM

The present inventors wholeheartedly conducted intensive investigations and found that a resin containing a ferromagnetic material, a compound having a macrocyclic $\pi$ electronic structure, and an adhesive resin has an improved magnetic permeability.
The present invention includes the following.

[1] A magnetically enhanced resin containing a ferromagnetic material, a compound having a macrocyclic $\pi$ electronic structure, and an adhesive resin.
[2] The magnetically enhanced resin according to the above [1], wherein the ferromagnetic material is a powder of a Fe-Ni alloy, a Fe-Co alloy, a Fe-Ni-Mo alloy, a Fe-Ni-Cu alloy, or a Fe-Al-Si alloy.
[3] The magnetically enhanced resin according to the above [1], wherein the ferromagnetic material is a powder of permalloy, supermalloy, sendust, or ferrite.
[4] The magnetically enhanced resin according to any one of the above [1] to [3], wherein the compound having a macrocyclic $\pi$ electronic structure is phthalocyanine, porphyrin, or polycyanine, a substitution product thereof, or a metal coordination complex thereof.
[5] The magnetically enhanced resin according to any one of the above [1] to [4], wherein the adhesive resin is an epoxy resin, a melamine resin, a polyimide resin, a polycarbonate resin, a phenol resin, or a fluorosilicone resin.
[6] The magnetically enhanced resin according to any one of the above [1] to [5], wherein the average particle size of the powder of the ferromagnetic material is 0.1 to 100 $\mu$m.
[7] The magnetically enhanced resin according to any one of the above [1] to [6], wherein the amount of the contained ferromagnetic material is 50 to 95 parts by weight, the amount of the contained compound having a macrocyclic $\pi$

electronic structure is 0.01 to 20 parts by weight, and the amount of the contained adhesive resin is 5 to 50 parts by weight, relative to 100 parts by weight of the solid components.

[8] A coating material containing the magnetically enhanced resin according to any one of the above [1] to [7].

ADVANTAGEOUS EFFECTS OF INVENTION

According to the present invention, the magnetic permeability of a magnetically enhanced resin can be improved. In more detail, the use of the magnetically enhanced resin lowers magnetoresistance and thereby improves the magnetic efficiency of various devices utilizing magnetism (hereinafter magnetic application devices), such as a motor, a generator, a magnetic coil, a magnetic transformer, a magnetic noise filter, etc.

BRIEF DESCRIPTION OF DRAWING

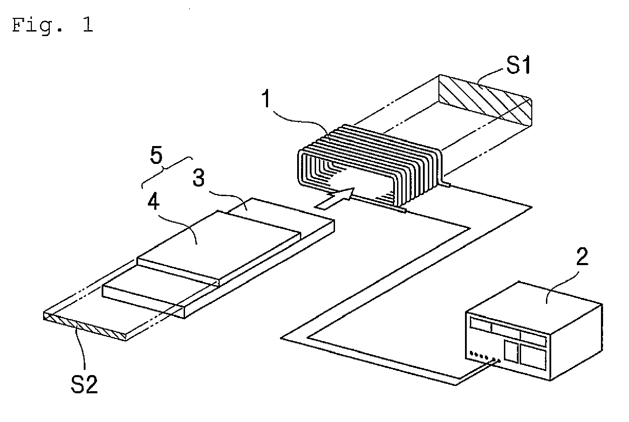

Fig. 1 shows an example of the measuring circuit for the magnetic properties or the relative permeability of magnetically enhanced resins.

DESCRIPTION OF EMBODIMENTS

The magnetically enhanced resin of the present invention contains a ferromagnetic material, a compound having a macrocyclic $\pi$ electronic structure, and an adhesive resin.

Ferromagnetic material

The magnetically enhanced resin of the present invention contains a ferromagnetic material. A ferromagnetic material is a material which, when placed in a magnetic field, is strongly magnetized in the direction of the applied field and shows residual magnetization even after the magnetic field is removed. The ferromagnetic material is not particularly limited, and examples thereof include soft magnetic materials, such as iron, silicon steel, permalloy, supermalloy, mu-metal, sendust, permendur, a soft ferrite, an amorphous magnetic alloy, and a nano crystal magnetic alloy; hard magnetic materials, such as an alnico magnet, a ferrite magnet, a samarium cobalt magnet, a neodymium iron boron magnet, and a samarium iron nitrogen magnet; and magnetostrictive materials, such as nickel and ferrite.

The examples of the ferromagnetic material also include a Fe-Ni alloy, a Fe-Co alloy, a Fe-Ni-Mo alloy, a Fe-Ni-Cu alloy, a Fe-Ni-Cr alloy, and a Fe-Al-Si alloy.

Here, permalloy is a ferromagnetic alloy which contains Fe and Ni as principal components. Permalloy also includes those containing, in addition to Fe and Ni, one or more kinds of Cr, Cu, and Mo. Supermalloy is a ferromagnetic alloy which contains Fe, Ni, and Mo as principal components and which is a kind of permalloy. Mu-metal is a ferromagnetic alloy which contains Fe, Ni, Cu, and Cr as principal components and which is a kind of permalloy. Sendust is a ferromagnetic alloy which contains Fe, Si, and Al as principal components.

Preferred ferromagnetic materials include soft magnetic materials, such as iron, silicon steel, permalloy, supermalloy, mu-metal, sendust, permendur, a soft ferrite, an amorphous magnetic alloy, and a nano crystal magnetic alloy, and more preferred are permalloy, supermalloy, sendust, and ferrite. Preferred ferromagnetic materials include a Fe-Ni alloy, a Fe-Co alloy, a Fe-Ni-Mo alloy, a Fe-Ni-Cu alloy, a Fe-Ni-Cr alloy, and a Fe-Al-Si alloy. The ferromagnetic material may be used alone or as a mixture of two or more thereof.

The ferromagnetic material is preferably a powder and more preferably a fine powder. The average particle size of the powder of the ferromagnetic material is preferably 0.1 to 100 $\mu$m, and more preferably 0.5 to 50 $\mu$m. The ferromagnetic material processed into a powder state can be uniformly distributed in the magnetically enhanced resin with ease. The magnetically enhanced resin in a powder state can be processed into a hardened body by calcinating at a low temperature.

The amount of the contained ferromagnetic material is preferably 50 to 95 parts by weight, and more preferably 75 to 95 parts by weight relative to 100 parts by weight of the solid components.

As used herein, the term "solid components" refers to a ferromagnetic material, a compound having a macrocyclic $\pi$ electronic structure, and an adhesive resin.

Compound having macrocyclic $\pi$ electronic structure

The magnetically enhanced resin of the present invention contains a compound having a macrocyclic $\pi$ electronic

structure. The compound having a macrocyclic π electronic structure is a planar molecule which has one or more cyclic structures and in which the number of π electrons equals 4n+2 (wherein n is 0 or a positive integer). The compound having a macrocyclic π electronic structure is not particularly limited, and examples thereof include phthalocyanine, porphyrin, polycyanine, crown ether, cyclen, and cyclam. The compound having a macrocyclic π electronic structure may be used alone or as a mixture of two or more thereof.

The compound may include an ether bond, a carbonyl group, an ester bond, and a carbon-carbon double bond in the ring. The compound may be substituted with any substituent. Examples of the substituent in the compound include an alkyl group, an alkynyl group, an alkenyl group, an aryl group, an alkoxy group, an alkylenedioxy group, an aryloxy group, an aralkyl group, an aralkyloxy group, a heteroaryloxy group, an alkylthio group, a cycloalkyl group, an aliphatic heterocyclic group, an arylthio group, an aralkylthio group, a heteroarylthio group, an amino group, a substituted amino group, a cyano group, a hydroxyl group, a sulfo group, an oxo group, a nitro group, a mercapto group, and a halogen atom. These substituents may be further substituted with another substituent. The compound may be colorless or colored.

The compound preferably has two or more unshared electron pairs in the molecule. Such a compound having two or more unshared electron pairs in the molecule can serve as a chelating agent and form coordinate bonds with a metal atom.

The compound having a macrocyclic π electronic structure may be used alone. Alternatively, a coordination complex of the compound with a metal atom, a metal halide, a metal oxide, or the like may be used. Examples of the metal ion with which the compound forms a coordination complex include iron, cobalt, copper, silver, zinc, tin, manganese, nickel, sodium, magnesium, aluminium, lithium, zirconium, etc. Examples of the metal halide or the metal oxide with which the compound forms a coordination complex include $SnCl_2$, $SiCl_4$, $AlCl_3$, $FeCl_3$, $TiO_2$, TiO, etc. The metal atom may be used alone or as a mixture of two or more thereof.

Examples of the compound having a macrocyclic π electronic structure include compounds, such as phthalocyanine, porphyrin, polycyanine, crown ether, cyclen, and cyclam; coordination complexes of phthalocyanine with a metal atom etc., such as phthalocyanine cobalt(II), phthalocyanine copper(II) (α-form), phthalocyanine copper(II) (β-form), phthalocyanine iron(II), phthalocyanine magnesium(II), phthalocyanine chloro aluminum, phthalocyanine dilithium, phthalocyanine lead, phthalocyanine silicon dichloride, phthalocyanine silver, phthalocyanine tin(IV) dichloride, Pigment Blue 15, phthalocyanine sodium, phthalocyanine tin (II), and phthalocyanine zinc; coordination complexes of a phthalocyanine compound or a substitution product thereof with a metal atom etc., such as 2,9,16,23-tetra-tert-butylphthalocyanine copper(II), and 1,2,3,4,8,9,10,11,15,16,17,18,22,23,24,25-hexadecafluoropht halocyanine copper(II); substitution products of porphyrin, such as 5-(4-carboxyphenyl)-10,15,20-triphenylporphyrin, 5,15-diphenylporphyrin, 5-(4-methoxycarbonylphenyl)-10,15,20-triphenylporphyrin, 2,3,7,8,12,13,17,18-octaethylporphyrin, 2,3,7,8,12,13,17,18-octafluoro-5,10,15,20-tetrakis(pentaflu orophenyl)porphyrin, protoporphyrin disodium, tetraphenylporphyrin, tetrakis(4-carboxyphenyl)porphyrin, 5,10,15,20-tetrakis(4-aminophenyl)porphyrin, 5,10,15,20-tetrakis(4-carboxymethyloxyphenyl)porphyrin, 5,10,15,20-tetrakis(2,6-dichlorophenyl)porphyrin, 5,10,15,20-tetrakis(3,5-dihydroxyphenyl)porphyrin, 5,10,15,20-tetrakis(3,5-dimethoxyphenyl)porphyrin, 5,10,15,20-tetrakis(4-hydroxyphenyl)porphyrin, 5,10,15,20-tetrakis(4-methoxypheny)porphyrin, 5,10,15,20-tetrakis(pentafluorophenyl)porphyrin, 5,10,15,20-tetrakis(2,4,6-trimethylphenyl)porphyrin, meso-tetraphenylchlorin, tetraphenylporphine, 5,10,15,20-tetra(4-pyridyl)porphyrin, α,β,γ,δ-tetrakis(1-methylpyridinium-4-yl)porphyrin-p-toluen esulfonate, and tetraphenylporphyrintetrasulfonic acid; coordination complexes of porphyrin or a substitution product thereof with a metal atom etc., such as bis(zinc porphyrin), hemin, oxo[5,10,15,20-tetra(4-pyridyl)porphyrinato]titanium(IV), pentamethylenebis[4-(10,15,20-triphenylporphin-5-yl)benzoat e]dizinc(II), and [5,10,15,20-tetrakis(4-methoxypheny)porphyrinato]cobalt(II) ;

substitution products of polycyanine, crown ether, cyclen, cyclam, etc.; and

coordination complexes of a compound such as polycyanine, crown ether, cyclen, and cyclam or a substitution product thereof, with a metal atom etc. Preferred as the compound having a macrocyclic π electronic structure are compounds, such as phthalocyanine, porphyrin, polycyanine, crown ether, cyclen, and cyclam, and particularly preferred are phthalocyanine, porphyrin, and polycyanine.

The amount of the contained compound having a macrocyclic π electronic structure is preferably 0.01 to 20 parts by weight, and more preferably 0.01 to 5 parts by weight relative to 100 parts by weight of the solid components. Also, the amount of the contained compound having a macrocyclic π electronic structure is preferably 0.01 to 40 parts by weight, and more preferably 0.01 to 10 parts by weight relative to 100 parts by weight of the ferromagnetic material.

The magnetically enhanced resin of the present invention contains an adhesive resin. The adhesive resin is not particularly limited, and examples thereof include thermoplastic resins, such as a polyvinyl acetate resin, a polyvinyl acetal, an ethylene-vinyl acetate resin, a poly vinyl chloride resin, an acrylic resin, a polyamide, a cellulose, a polycarbonate resin, and an α-olefin; and thermosetting resins, such as a urea resin, a melamine resin, a phenol resin, a resorcinol resin, an epoxy resin, a structural acrylic resin, a polyester, a polyurethane, a silicone resin, a fluorosilicone resin, and a polyaromatic. In terms of coating properties, preferred among them are an epoxy resin, a melamine resin, a polyimide resin, a polycarbonate resin, a phenol resin, and a fluorosilicone resin, and more preferred are a resol-type phenol resin and a fluorosilicone resin. The amount of the contained adhesive resin is preferably 5 to 50 parts by weight, and more preferably 5 to 25 parts by weight relative to 100 parts by weight of the solid components. Due to the contained adhesive resin, the magnetically enhanced resin of the present invention can exert an adhesive force. Moreover, the adhesion resin serves as a binder and as a result the ferromagnetic material, the compound having a macrocyclic $\pi$ electronic structure, and other optional components can be uniformly mixed.

Optional components

The magnetically enhanced resin of the present invention may contain a solvent. The solvent is not particularly limited as long as the compound having a macrocyclic $\pi$ electronic structure, the magnetic material, the adhesive resin, and other optional components can be dissolved therein.

Examples of organic solvents include, aliphatic hydrocarbons, such as pentane, hexane, heptane, octane, and cyclohexane; aromatic hydrocarbons, such as benzene, toluene, and xylene; halohydrocarbons, such as dichloromethane, 1,2-dichloroethane, chloroform, tetrachloromethane, and o-dichlorobenzene; alcohols, such as methanol, ethanol, isopropyl alcohol, t-butyl alcohol, and t-amylalcohol; glycols, such as ethylene glycol, propylene glycol, diethylene glycol, and butyl carbitol; ethers, such as dimethyl ether, ethylmethyl ether, diethyl ether, diisopropyl ether, diglyme, tert-butyl methyl ether, dimethoxyethane, ethylene glycol diethyl ether, tetrahydrofuran, and 1,4-dioxane; amides, such as N,N-dimethylformamide, N,N-dimethylacetamide, and N-methylpyrrolidone; sulfoxides, such as dimethyl sulfoxide; nitriles, such as acetonitrile, propionitrile, and benzonitrile; ketones, such as acetone, methylethyl ketone, and methylisobutyl ketone; ester compounds, such as methyl acetate and ethyl acetate; aprotic polar solvents, such as N,N-dimethylformamide (DMF), dimethylacetamide (DMA), dimethyl sulfoxide (DMSO), and N-methyl-2-pyrrolidone (NMP); and high-boiling aromatic naphtha (trade name: Solvesso 150).

Examples of inorganic solvents include acidic solvents, such as hydrochloric acid, sulfuric acid, nitric acid, carbonic acid, and phosphoric acid; basic solvents, such as sodium hydroxide, magnesium hydroxide, calcium hydroxide, potassium hydroxide, and sodium hydrogen carbonate; and neutral solvents, such as pure water and brine.

Among the above solvents, organic solvents are preferred for uniform mixing of each component, and more preferred are butyl carbitol and methylethyl ketone.

The amount of the contained solvent is preferably 50 parts by weight or less, and more preferably 30 parts by weight or less relative to 100 parts by weight of the solid components. The solvent is an optional component and may be used or not used. In the cases where a mixing device (such as an automatic mortar grinder, a planetary mixer, a bead mill, or a ball mill) is used, it is possible that no or only a very small amount of the solvent is used. The added solvent may be vaporized by heat etc. or remain contained in the magnetically enhanced resin. The magnetically enhanced resin may contain abundant solvent and be in a liquid form, or contain a small amount of solvent and be in a semisolid or solid form.

The magnetically enhanced resin of the present invention may contain any optional compound etc. to the extent that the addition of such an optional compound etc. does not impair the effects of the present invention. Examples of the optional compound etc. that may be contained include a metal powder, a hydrophilic or hydrophobic silica powder, a clay powder, an organic powder such as an acrylic powder, a thixotropic agent such as an amide wax, a dehydrating agent such as calcium oxide, a diluent, a plasticizer, a flame retarder, a functional oligomer, a hindered amine compound, a hindered phenol compound, an age resistor such as 3-(2,2,6,6-tetramethylpiperidin-4-yloxy)propyltriethoxysila ne, an ultraviolet absorber such as a benzotriazol compound, a pigment, a titanate coupling agent, an aluminium coupling agent, a silane coupling agent such as 3-glycidoxypropyltrimethoxysilane, a water resistance improver such as a blocked polyisocyanate, a drying oil, etc.

Mixing into magnetically enhanced resin

The magnetically enhanced resin of the present invention can be produced by blending, in addition to a ferromagnetic material, a compound having a macrocyclic $\pi$ electronic structure, and an adhesive resin, optional components such as a solvent as needed. The blending of the components may be performed using a mixing device, such as an automatic mortar grinder, a planetary mixer, a bead mill, or a ball mill until uniformly dispersed.

Properties of magnetically enhanced resin

The magnetically enhanced resin of the present invention has a high magnetic permeability. Since a space filled up with the magnetically enhanced resin has a low magnetoresistance, more magnetic flux penetrates. That is, the use of the magnetically enhanced resin can improve the magnetic efficiency of magnetic application devices.

The form of the magnetically enhanced resin may be any of a solid, liquid, powder, gel, etc.

<u>Use</u>

The magnetically enhanced resin in the form of a solid or powder can be used as a coating material after dissolved in a solvent. The resin in the form of a liquid or gel can be used as a coating material as it is.

The coating material can be applied to a targeted part of a magnetic application device by various kinds of methods using, for example, a coating tool such as a broad brush, a spray, a roller, a trowel, a brush, a spatula, or a coating machine such as a roll coater, a flow coater, or a vacuum impregnator.

Examples of the targeted part to which the coating material is applied include a plane or curved surface of, for example, a glass plate, a metal plate, etc. or a particular plane surface of a magnetic application device such as an electric motor, etc.

The magnetically enhanced resin can be used as a filler. The filler can be packed into a target part, for example a space etc. of a magnetic application device by, for example, spraying using a nozzle, or injection using a syringe, a tube, or a filling machine.

Since the magnetic permeability of the magnetically enhanced resin is higher than that of the air or the vacuum, application of the resin to an objective part or packing of the resin into a space of the magnetically enhanced resin reduces the magnetoresistance of the part and thereby improves the magnetic efficiency of the magnetic application devices.

<u>Hardened body</u>

The magnetically enhanced resin of the present invention can be made into a hardened body by calcination performed after application to a desired part. The hardened body can be produced by the steps of [1] applying the magnetically enhanced resin uniformly to form a coating, [2] drying the magnetically enhanced resin, and [3] calcinating the dried magnetically enhanced resin. The step of drying for producing the hardened body can be performed by leaving the resin, for example, at 30 to 80°C for 30 minutes. The step of calcination for producing the hardened body can be performed by calcination, for example, at 120 to 200°C for 5 to 100 minutes.

Since the hardened body has a high magnetic permeability, the magnetoresistance is low and more magnetic flux penetrates. Providing the hardened body to part of a magnetic application device improves the magnetic efficiency of the magnetic application device.

<u>Magnetically enhanced body</u>

A device having a magnetically enhanced layer consisting of the above magnetically enhanced resin or a hardened body thereof is called a magnetically enhanced body. Examples of the magnetically enhanced body include a motor, a magnetic coil, a magnetic transformer, a magnetic noise filter, a generator, etc. The magnetically enhanced body has a magnetically enhanced layer with a reduced magnetoresistance and thus the magnetic efficiency of the magnetic application device can be improved.

EXAMPLES

Hereinafter, the present invention will be illustrated in more detail by Examples, but it is not limited thereto.

<u>Raw material</u>

As the adhesive resin, Resin A: a resol-type phenol resin ("AH-880" made by Lignyte Co., Ltd.) and Resin B: a fluorosilicone resin ("SIFEL2610" made by Shin-Etsu Chemical Co., Ltd.) were used.

As the ferromagnetic material, a sendust powder "SFR-FeSiAl" made by Nippon Atomized Metal Powders Corp. (average particle size: 15 $\mu$m) was used.

As the compound having a macrocyclic $\pi$ electronic structure, phthalocyanine (hereinafter "Pc") "P0355" made by Tokyo Chemical Industry Co., Ltd. was used.

<u>Mixing and calcination</u>

For mixing of the raw materials, a planetary mixer "MAZERUSTAR-KK-2000" made by Kurabo Industries, Ltd. was used. For calcination of the coating material, an electrical oven "PH(H)-102" made by Tabai Espec Corp. was used.

Measurement

Air core coil 1 was prepared by forming an enamel-covered copper wire into a prism form with a substantially rectangular cross-section and binding adjacent loops to each other with an adhesive. The air core cross-section area S1 is the cross-section area of the air core coil 1. The measured value of the air core cross-section area S1 was 60 mm$^2$. The number of turns of the air core coil 1 was 75. The air core coil 1 was prepared in Toyama Industrial Technology Center. More number of turns of the air core coil results in more accurate measurement of inductance.

As the measuring instrument 2, an LF impedance analyzer "4196A" made by Yokogawa Hewlett-Packard, Ltd. was used. The measuring instrument 2 was connected with the air core coil 1. The measurement frequency was 100 kHz.

Example 1

First, 8.0 parts by weight of Resin A, 91. 9 parts by weight of the ferromagnetic material, and 0.1 part by weight of Pc were blended. To this, about 5 mL of butyl carbitol (made by Wako Pure Chemical Industries, Ltd.) and about 3 mL of methylethylketone (MEK) (made by Wako Pure Chemical Industries, Ltd.) were added and mixed using the planetary mixer to prepare a magnetically enhanced resin.

The thickness to of an optical microscope glass slide 3 (made by As One Corp.) was measured with a micrometer (made by Mitutoyo Corp., measurement range: 1 $\mu$m to 25 mm). The magnetically enhanced resin was applied onto the optical microscope glass slide 3 so that the coating thickness was about 100 $\mu$m. This was calcinated using the electrical oven at about 160°C for about 30 minutes to form a magnetically enhanced resin layer 4. The optical microscope glass slide 3 and the magnetically enhanced resin layer 4 were collectively called test piece 5. The thickness t of the test piece 5 was measured with the micrometer. The thickness of the magnetically enhanced resin layer 4 was calculated as the difference between t and to, and thereby the sample cross-section area S2 was determined. The sample cross-section area S2 means the cross-section area of the magnetically enhanced resin layer 4.

The measured value of the inductance $L_o$ in a condition where nothing was inserted in the air core circuit 1 was 18.04 $\mu$H. Next, the test piece 5 was inserted into the air core circuit 1, and the inductance L was measured. Since the optical microscope glass slide 3 does not have any magnetic properties, the change in the inductance L resulting from the insertion of the test piece 5 is attributable to the magnetically enhanced resin layer 4. The magnetic permeability of the test piece 5 was calculated by Mathematical Expression 1. As a result, the relative permeability $\mu$ in Example 1 was 11.3.

## Mathematical Expression 1

$$\mu = 1 + (L/L_0 - 1) \times (S2/S1)$$

Examples 2 and 3 and Comparative Example 1

The procedure was performed in the same manner as in Example 1 except that the blending ratios of the materials used were as shown in Table 1. The blending ratios and results are shown in Table 1. Each amount of the blended materials in Table 1 is expressed in parts by weight relative to 100 parts by weight of the solid components.

Table 1

|  | Resin A (parts by weight) | Ferromagnetic material (parts by weight) | Pc (parts by weight) | Relative permeability |
|---|---|---|---|---|
| Example 1 | 8.0 | 91.9 | 0.1 | 11.3 |
| Example 2 | 8.0 | 91.7 | 0.3 | 10.4 |
| Example 3 | 8.0 | 91.5 | 0.5 | 10.7 |
| Comparative Example 1 | 8.0 | 92.0 | 0.0 | 9.8 |

Examples 4 to 6 and Comparative Example 2

To prepare test pieces, the procedure was performed in the same manner as in Example 1 except that the blending ratios of the materials used were as shown in Table 2. The blending ratios and results are shown in Table 2.

Table 2

| | Resin A (parts by weight) | Ferromagnetic material (parts by weight) | Pc (parts by weight) | Relative permeability |
|---|---|---|---|---|
| Example 4 | 5.0 | 94.9 | 0.1 | 10.5 |
| Example 5 | 5.0 | 94.7 | 0.3 | 10.3 |
| Example 6 | 5.0 | 94.5 | 0.5 | 10.1 |
| Comparative Example 2 | 5.0 | 95.0 | 0.0 | 9.3 |

Examples 7 to 9 and Comparative Example 3

To prepare test pieces, the procedure was performed in the same manner as in Example 1 except that Resin B was used as the adhesive resin and that the blending ratios of the materials used were as shown in Table 5. The blending ratios and results are shown in Table 3.

Table 3

| | Resin B (parts by weight) | Ferromagnetic material (parts by weight) | Pc (parts by weight) | Relative permeability |
|---|---|---|---|---|
| Example 7 | 25.0 | 74.7 | 0.3 | 6.1 |
| Example 8 | 25.0 | 74.5 | 0.5 | 6.1 |
| Example 9 | 25.0 | 74.2 | 0.8 | 5.9 |
| Comparative Example 3 | 25.0 | 75.0 | 0.0 | 5.4 |

As is clear from Tables 1 to 3, blending Pc with the magnetically enhanced resin containing an adhesive resin and a ferromagnetic material improves the relative permeability of the adhesive resin.

INDUSTRIAL APPLICABILITY

The magnetically enhanced resin or the like of the present invention, of which the magnetic permeability is improved, is industrially useful.

REFERENCE SIGNS LIST

1      Air core coil
2      Measuring instrument
3      Optical microscope glass slide
4      Magnetically enhanced resin layer
5      Test piece
S1     Air core cross-section area
S2     Sample cross-section area

**Claims**

1.    A magnetically enhanced resin containing a ferromagnetic material, a compound having a macrocyclic $\pi$ electronic structure, and an adhesive resin.

2.    The magnetically enhanced resin according to claim 1, wherein the ferromagnetic material is a powder of a Fe-Ni alloy, a Fe-Co alloy, a Fe-Ni-Mo alloy, a Fe-Ni-Cu alloy, or a Fe-Al-Si alloy.

**3.** The magnetically enhanced resin according to claim 1, wherein the ferromagnetic material is a powder of permalloy, supermalloy, sendust, or ferrite.

**4.** The magnetically enhanced resin according to any one of claims 1 to 3, wherein the compound having a macrocyclic $\pi$ electronic structure is phthalocyanine, porphyrin, or polycyanine, a substitution product thereof, or a metal coordination complex thereof.

**5.** The magnetically enhanced resin according to any one of claims 1 to 4, wherein the adhesive resin is an epoxy resin, a melamine resin, a polyimide resin, a polycarbonate resin, a phenol resin, or a fluorosilicone resin.

**6.** The magnetically enhanced resin according to any one of claims 1 to 5, wherein the average particle size of the powder of the ferromagnetic material is 0.1 to 100 $\mu$m.

**7.** The magnetically enhanced resin according to any one of claims 1 to 6, wherein the amount of the contained ferromagnetic material is 50 to 95 parts by weight, the amount of the contained compound having a macrocyclic $\pi$ electronic structure is 0.01 to 20 parts by weight, and the amount of the contained adhesive resin is 5 to 50 parts by weight, relative to 100 parts by weight of the solid components.

**8.** A coating material containing the magnetically enhanced resin according to any one of claims 1 to 7.

Fig. 1

<table>
<tr><td colspan="2" align="center">**INTERNATIONAL SEARCH REPORT**</td><td>International application No.<br>PCT/JP2012/053784</td></tr>
</table>

A. CLASSIFICATION OF SUBJECT MATTER
*C08L101/00*(2006.01)i, *C08K3/08*(2006.01)i, *C08K5/3415*(2006.01)i, *C09D5/23*
(2006.01)i, *C09D201/00*(2006.01)i, *H01F1/26*(2006.01)i, *H01F1/33*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08, C09D1/00-201/10, H01F1/00-1/44

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 4-225077 A (Atom Kagaku Toryo Kabushiki<br>Kaisha),<br>14 August 1992 (14.08.1992),<br>claims; example 1<br>(Family: none) | 1-4,6-8<br>5 |
| X<br>Y | JP 10-168339 A (Toyo Aluminium Kabushiki<br>Kaisha),<br>23 June 1998 (23.06.1998),<br>claims; example 1<br>(Family: none) | 1-4,6-8<br>5 |
| X<br>Y | JP 8-50716 A (Hitachi Maxell, Ltd.),<br>20 February 1996 (20.02.1996),<br>claims; paragraphs [0025] to [0029]; example 7<br>& US 5952074 A | 1-4,6-8<br>5 |

☒  Further documents are listed in the continuation of Box C.        ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 May, 2012 (15.05.12) | Date of mailing of the international search report<br>05 June, 2012 (05.06.12) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

| | International application No. |
|---|---|
| | PCT/JP2012/053784 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 61-104601 A  (Dainippon Ink and Chemicals,<br>Inc.),<br>22 May 1986 (22.05.1986),<br>claims; examples<br>(Family: none) | 1-4,6-8<br>5 |
| Y | JP 8-279148 A  (Fuji Photo Film Co., Ltd.),<br>22 October 1996 (22.10.1996),<br>paragraphs [0022] to [0024]<br>(Family: none) | 5 |
| Y | JP 5-242468 A  (Kanzaki Paper Mfg. Co., Ltd.),<br>21 September 1993 (21.09.1993),<br>paragraph [0013]<br>(Family: none) | 5 |
| Y | JP 9-78003 A  (Daido Steel Co., Ltd.),<br>25 March 1997 (25.03.1997),<br>claims; paragraphs [0016], [0021]<br>(Family: none) | 5 |
| A | JP 2010-90264 A  (Toyama-Ken, Yugen Kaisha Ai<br>Create, Japan Science and Technology Agency),<br>22 April 2010 (22.04.2010),<br>claims<br>(Family: none) | 1-8 |
| A | JP 64-43505 A  (Kanji KAMAIKE),<br>15 February 1989 (15.02.1989),<br>claims<br>(Family: none) | 1-8 |
| A | JP 11-26222 A  (Hitachi, Ltd.),<br>29 January 1999 (29.01.1999),<br>claims<br>(Family: none) | 1-8 |

Form PCT/ISA/210 (continuation of second sheet) (July 2009)

| **INTERNATIONAL SEARCH REPORT** | International application No. |
|---|---|
| | PCT/JP2012/053784 |

Subject to be covered by this search:

As specified in claim 1, the present invention is an invention in which an essential requirement is to use a compound that is "a compound having a macrocyclic π-electron structure". However, it is unclear as to what technical meaning the expression "compound having a macrocyclic π-electron structure" has. The scope of the "compound" (as to what compounds the scope includes) is unclear.

Specific explanations on the "compound" which are given in the description show the following. In paragraph [0011], there is an explanation that "the term 'compound having a macrocyclic π-electron structure' means a compound which has a planar molecule that has one or more ring structures therein and in which the number of π electrons is 4n+2 (wherein n is 0 or a positive integer)".

However, such an explanation means that the term involves compounds which are never expressed by the "macrocyclic π-electron structure", such as benzene [C6H6]. Consequently, that explanation cannot be considered to be valid with respect to the contents. The scope of the "compound having a macrocyclic π-electron structure" cannot hence be clearly grasped from that explanation.

In paragraphs [0011] and [0012], examples which belong to the "compound having a macrocyclic π-electron structure" are enumerated. However, of the enumeration, "cyclen" and "cyclam", for example, are compounds which originally have no π electron (cyclen is 1,4,7,10-tetraazacyclododecane, and cyclam is 1,4,8,11-tetraazacyclotetradecane). Furthermore, with respect to "crown ethers" and "polycyanines", for example, it is unclear as to what specific chemical structures these compounds have when the compounds have a "macrocyclic π-electron structure".

In paragraph [0012], a lot of specific compound names of the "phthalocyanines" and "porphyrins" are enumerated. However, no specific compound names of the "crown ethers" or "polycyanines" are given.

As apparent from the above, even when the explanations on the "compound having a macrocyclic π-electron structure" and enumerated specific examples thereof which are given in the description are examined, the scope of the "compound" is not clearly specified.

Consequently, the present invention, in which an essential requirement is to use a compound that is "a compound having a macrocyclic π-electron structure", cannot be considered to be clear.

Incidentally, a search was made for "phthalocyanines", which clearly belong to the "compound having a macrocyclic π-electron structure", and in which the effect produced by the use of the "compound" has been demonstrated in the section [examples], and for the "porphyrins", which clearly are akin in structure to the "phthalocyanines".

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- No.237: Effect of chelating agent on properties of resin-bonded magnetic materials (in Japanese. *Abstracts of the 1987 Annual Meeting of the Institute of Electrical Engineers of Japan,* 1987, 287-288